# EUROPEAN PATENT APPLICATION

(11) **EP 3 496 455 A1**
(43) Date of publication of application: **12.06.2019**
(21) Application number: 17836322.2
(22) Date of filing: 26.07.2017
(51) Int. Cl.: H04W 36/00, H04W 74/08

(54) **HANDOVER PROCESSING METHOD AND DEVICE**

(30) Priority: 01.08.2016 CN 201610621950
(71) Applicant: ZTE Corporation, Shenzhen, Guangdong 518057 (CN)
(72) Inventor: FANG, Jianmin, Shenzhen Guangdong 518057 (CN)
(74) Representative: Regimbeau
(86) International application number: PCT/CN2017/094545
(87) International publication number: WO 2018/024140

(57) **Abstract**

The present invention provides a handover processing method and device. The method includes: receiving, by a source evolved NodeB (eNB), at least one of user equipment (UE) uplink grant information and UE access indication information of a target eNB, where the UE access indication information is indication information for a UE to access a target cell; sending, by the source eNB, a downlink data state report of the UE to the target eNB according to at least one of the UE uplink grant information and the UE access indication information; and forwarding, by the source eNB, downlink data of the UE to the target eNB according to at least one of the UE uplink grant information and the UE access indication information. The present invention solves the problem in the existing art that downlink data cannot be sent to a UE in time due to a possible absence of related downlink data and a downlink data state report in a target eNB, avoiding a temporary traffic interruption and improving user experience.

## Description

### TECHNICAL FIELD

The present invention relates to the field of communications and, in particular, to a handover processing method and device.

### BACKGROUND

The Long Term Evolution (LTE) network includes an Evolved Universal Terrestrial Radio Access Network (E-UTRAN) and a Core Network (CN). The E-UTRAN includes an evolved Node B (eNB). The CN includes a mobile management entity (MME) and a serving gateway (S-GW). The eNB is connected to the CN through an S1 interface and the eNBs are connected to each other through an X2 interface. One eNB may manage one or more cells. The interface between a user equipment (UE) and a cell is referred to as a Uu interface (air interface).

In the current LTE system, in a handover process of the UE from a cell of one eNB to a cell of another eNB, the UE is disconnected with the source cell and then connected to the target cell, which results in a temporary traffic interruption of the UE. One method for avoiding the temporary traffic interruption of the UE is to enable the UE to maintain the connection with the source cell as much as possible until the UE successfully establishes the connection with the target cell.

When a target eNB sends downlink data to the UE, the target eNB needs to acquire related downlink data and a downlink data state report from a source eNB in advance. In the scenario where the UE is first disconnected with the source cell and then connected to the target cell, when the source cell delivers a handover command to the UE, the source eNB may determine the downlink data and the downlink data state report of the UE that need to be sent to the target eNB in advance. However, in the scenario where the UE maintains the connection with the source cell as much as possible until the UE successfully establishes the connection with the target cell in the handover process, since the source cell may be still delivering data to the UE, the source eNB cannot determine the related downlink data and downlink data state report needed when the target eNB is able to send the downlink data to the UE. Therefore, the target eNB may be unable to acquire the related downlink data and downlink data state report in time and send downlink data to the UE in time so that the temporary traffic interruption still appears. Therefore, in view of the problem in the existing art that the downlink data cannot be sent to the UE in time due to a possible absence of the related downlink data and downlink data state report in the target eNB, no solution has been proposed.

### SUMMARY

Embodiments of the present invention provide a handover processing method and device to solve at least the problem in the existing art that downlink data cannot be sent to a UE in time due to a possible absence of related downlink data and a downlink data state report in a target eNB.

An embodiment of the present invention provides a handover processing method. The method includes the steps described below.

In a handover process of a UE from a source cell of a source eNB to a target cell of a target eNB, the source eNB receives at least one of UE uplink grant information and UE access instruction information of the target eNB, where the UE access instruction information is instruction information for the UE to access the target cell.

The source eNB sends a downlink data state report of the UE to the target eNB according to at least one of the UE uplink grant information and the UE access indication information.

The source eNB forwards downlink data of the UE to the target eNB according to the at least one of the UE uplink grant information and UE access indication information.

In another aspect, an embodiment of the present invention further provides a handover processing method. The method includes the steps described below.

In a handover process of a UE from a source cell of a source eNB to a target cell of a target eNB, the target eNB sends at least one of UE uplink grant information and UE access indication information to the source eNB, where the UE access indication information is indication information for the UE to access the target cell.

The target eNB receives a downlink data state report of the UE sent by the source eNB according to at least one of the UE uplink grant information and the UE access indication information.

The target eNB receives downlink data of the UE forwarded by the source eNB according to at least one of the UE uplink grant information and the UE access indication information.

In another aspect, an embodiment of the present invention further provides a handover processing device applied to a source eNB. The device includes a first receiving module, a first sending module and a forwarding module.

The first receiving module is configured to receive, in a handover process of a UE from a source cell of the source eNB to a target cell of a target eNB, at least one of UE uplink grant information and UE access indication information of the target eNB, where the UE access indication information is indication information for the UE to access the target cell.

The first sending module is configured to send a downlink data state report of the UE to the target eNB according to at least one of the UE uplink grant information and the UE access indication information.

The forwarding module is configured to forward downlink data of the UE to the target eNB according to at least one of the UE uplink grant information and the UE access indication information.

In another aspect, an embodiment of the present invention further provides a handover processing device applied to a target eNB. The device includes a second sending module, a second receiving module and a third receiving module.

The second sending module is configured to send, in a handover process of a UE from a source cell of a source eNB to a target cell of the target eNB, at least one of UE uplink grant information and UE access indication information to the source eNB, where the UE access indication information is indication information for the UE to access the target cell.

The second receiving module is configured to receive a downlink data state report of the UE sent by the source eNB according to at least one of the UE uplink grant information and the UE access indication information.

The third receiving module is configured to receive downlink data of the UE forwarded by the source eNB according to at least one of the UE uplink grant information and the UE access indication information.

An embodiment of the present invention further provides a computer storage medium, which is configured to store executable instructions for executing the handover processing method in the embodiments described above.

In the embodiments of the present invention, in the handover process of the UE from the source cell of the source eNB to the target cell of the target eNB, the source eNB receives at least one of the UE uplink grant information and the UE access indication information of the target eNB, where the UE access indication information is the indication information for the UE to access the target cell; the source eNB sends the downlink data state report of the UE to the target eNB according to at least one of the UE uplink grant information and the UE access indication information; and the source eNB forwards the downlink data of the UE to the target eNB according to at least one of the UE uplink grant information and the UE access indication information. The present invention solves the problem in the existing art that the downlink data cannot be sent to the UE in time due to the possible absence of the related downlink data and downlink data state report in the target eNB, avoids a temporary traffic interruption and improves user experience.

### BRIEF DESCRIPTION OF DRAWINGS

The drawings described herein are used to provide a further understanding of the present invention and form a part of the present application. The exemplary embodiments and descriptions thereof in the present invention are used to explain the present invention and not to limit the present invention in any improper way. In the drawings:
FIG. 1 is a flowchart 1 of a handover processing method according to an embodiment of the present invention;
FIG. 2 is a flowchart 2 of a handover processing method according to an embodiment of the present invention;
FIG. 3 is a block diagram 1 of a handover processing device according to an embodiment of the present invention;
FIG. 4 is a block diagram 2 of a handover processing device according to an embodiment of the present invention;
FIG. 5 is a block diagram of a handover processing device according to a preferred embodiment of the present invention;
FIG. 6 is a schematic diagram 1 of an enhanced handover method according to a preferred embodiment of the present invention; and
FIG. 7 is a schematic diagram 2 of an enhanced handover method according to a preferred embodiment of the present invention.

### DETAILED DESCRIPTION

Hereinafter the present invention will be described in detail with reference to the drawings in conjunction with embodiments. It is to be noted that if not in collision, the embodiments and features therein in the present application may be combined with each other.

It is to be noted that the terms "first", "second" and the like in the description, claims and drawings of the present invention are used to distinguish between similar objects and are not necessarily used to describe a particular order or sequence.

### Embodiment 1

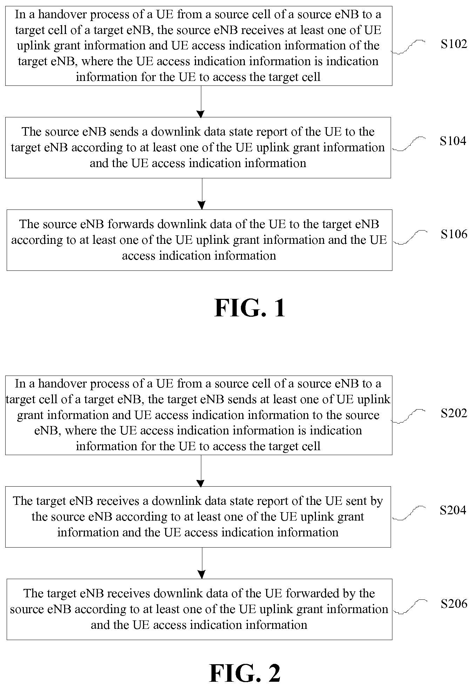

The embodiment provides a handover processing method. FIG. 1 is a flowchart 1 of a handover processing method according to an embodiment of the present invention. As shown in FIG. 1, the method includes the steps described below.

In step S102, in a handover process of a UE from a source cell of a source eNB to a target cell of a target eNB, the source eNB receives at least one of UE uplink grant information and UE access indication information of the target eNB, where the UE access indication information is indication information for the UE to access the target cell.

In step S104, the source eNB sends a downlink data state report of the UE to the target eNB according to at least one of the UE uplink grant information and the UE access indication information.

In step S106, the source eNB forwards downlink data of the UE to the target eNB according to at least one of the UE uplink grant information and the UE access indication information.

In the above steps, in the handover process of the UE from the source cell of the source eNB to the target cell of the target eNB, the source eNB receives at least one of the UE uplink grant information and the UE access indication information of the target eNB, where the UE access indication information is the indication information for the UE to access the target cell; the source eNB sends the downlink data state report of the UE to the target eNB according to at least one of the UE uplink grant information and the UE access indication information; and the source eNB forwards the downlink data of the UE to the target eNB according to at least one of the UE uplink grant information and the UE access indication information. The method solves the problem in the existing art that downlink data cannot be sent to a UE in time due to a possible absence of related downlink data and a downlink data state report in a target eNB, avoids a temporary traffic interruption and improves user experience.

Preferably, the UE access indication information includes at least one of an indication that the target cell has received random access preamble information of the UE, an indication that the target cell has received first piece of scheduled uplink transmission information of the UE, an indication that the target cell has received RRC connection reconfiguration complete information of the UE and an indication that the target cell has received first piece of uplink data of the UE.

Preferably, the step in which the source eNB receives at least one of the UE uplink grant information and the UE access indication information of the target eNB includes at least one of the steps described below. The source eNB sends a handover request message to the target eNB and receives a response message sent by the target eNB according to the handover request message, where the response message carries the UE uplink grant information. The source eNB receives the UE access indication information, where the UE access indication information is sent by the target eNB after the target cell has received the RRC connection reconfiguration complete information of the UE or the random access preamble information of the UE or the first piece of scheduled uplink transmission information of the UE or the first piece of uplink data of the UE.

Preferably, the step in which the source eNB sends the downlink data state report of the UE to the target eNB according to at least one of the UE uplink grant information and the UE access indication information includes at least one of the steps described below.

The source eNB sends the downlink data state report of the UE to the target eNB at a first uplink grant subframe indicated by the UE uplink grant information.

The source eNB sends the downlink data state report of the UE to the target eNB i ms before the first uplink grant subframe indicated by the UE uplink grant information.

The source eNB sends the downlink data state report of the UE to the target eNB at each uplink grant subframe indicated by the UE uplink grant information.

The source eNB sends the downlink data state report of the UE to the target eNB i ms before the each uplink grant subframe indicated by the UE uplink grant information.

The source eNB sends the downlink data state report of the UE to the target eNB when the UE access indication information is the indication that the target cell has received the random access preamble information of the UE or the indication that the target cell has received the first piece of scheduled uplink transmission information of the UE.

Preferably, the step in which the source eNB forwards the downlink data of the UE to the target eNB according to at least one of the UE uplink grant information and the UE access indication information includes at least one of the steps described below.

The source eNB forwards the downlink data of the UE to the target eNB at the first uplink grant subframe indicated by the UE uplink grant information.

The source eNB forwards the downlink data of the UE to the target eNB i ms before the first uplink grant subframe indicated by the UE uplink grant information.

The source eNB forwards the downlink data of the UE to the target eNB when the UE access indication information is the indication that the target cell has received the random access preamble information of the UE or the indication that the target cell has received the first piece of scheduled uplink transmission information of the UE.

Preferably, the UE uplink grant information is allocated by the target eNB to the UE and includes one of the following information:
a starting system frame number and subframe number, and an ending system frame number and subframe number;
the starting system frame number and subframe number, and a number of spaced cyclic subframes; and
the starting system frame number and subframe number, the number of spaced cyclic subframes and a maximum number of cycles.

An embodiment of the present invention further provides a handover processing method. FIG. 2 is a flowchart 2 of a handover processing method according to an embodiment of the present invention. As shown in FIG. 2, the method includes the steps described below.

In step S202, in a handover process of a UE from a source cell of a source eNB to a target cell of a target eNB, the target eNB sends at least one of UE uplink grant information and UE access indication information to the source eNB, where the UE access indication information is indication information for the UE to access the target cell.

In step S204, the target eNB receives a downlink data state report of the UE sent by the source eNB according to at least one of the UE uplink grant information and the UE access indication information.

In step S206, the target eNB receives downlink data of the UE forwarded by the source eNB according to at least one of the UE uplink grant information and the UE access indication information.

Preferably, the UE access indication information includes at least one of an indication that the target cell has received random access preamble information of the UE, an indication that the target cell has received first piece of scheduled uplink transmission information of the UE, an indication that the target cell has received RRC connection reconfiguration complete information of the UE and an indication that the target cell has received first piece of uplink data of the UE.

Preferably, the step in which the target eNB sends at least one of the UE uplink grant information and the UE access indication information to the source eNB includes at least one of the steps described below. The target eNB receives a handover request message sent by the source eNB and sends a response message of the handover request message to the source eNB, where the response message carries the UE uplink grant information. The target eNB sends the UE access indication information to the source eNB after the target cell has received the RRC connection reconfiguration complete information of the UE or the random access preamble information of the UE or the first piece of scheduled uplink transmission information of the UE or the first piece of uplink data of the UE.

Preferably, the step in which the target eNB receives the downlink data state report of the UE sent by the source eNB according to at least one of the UE uplink grant information and the UE access indication information includes at least one of the steps described below.

The target eNB receives the downlink data state report of the UE, where the downlink data state report of the UE is sent by the source eNB at a first uplink grant subframe indicated by the UE uplink grant information.

The target eNB receives the downlink data state report of the UE, where the downlink data state report of the UE is sent by the source eNB i ms before the first uplink grant subframe indicated by the UE uplink grant information.

The target eNB receives the downlink data state report of the UE, where the downlink data state report of the UE is sent by the source eNB at each uplink grant subframe indicated by the UE uplink grant information.

The target eNB receives the downlink data state report of the UE, where the downlink data state report of the UE is sent by the source eNB i ms before the each uplink grant subframe indicated by the UE uplink grant information.

The target eNB receives the downlink data state report of the UE, where the downlink data state report of the UE is sent by the source eNB when the UE access indication information is the indication that the target cell has received the random access preamble information of the UE or the indication that the target cell has received the first piece of scheduled uplink transmission information of the UE.

Preferably, the step in which the target eNB receives the downlink data of the UE forwarded by the source eNB according to at least one of the UE uplink grant information and the UE access indication information includes at least one of the steps described below.

The target eNB receives the downlink data of the UE, where the downlink data of the UE is forwarded by the source eNB at the first uplink grant subframe indicated by the UE uplink grant information.

The target eNB receives the downlink data of the UE, where the downlink data of the UE is forwarded by the source eNB i ms before the first uplink grant subframe indicated by the UE uplink grant information.

The target eNB receives the downlink data of the UE, wherein the downlink data of the UE is forwarded by the source eNB when the UE access indication information is the indication that the target cell has received the random access preamble information of the UE or the indication that the target cell has received the first piece of scheduled uplink transmission information of the UE.

Preferably, the method further includes the step described below.

After the target eNB determines that the target cell is capable of sending the downlink data to the UE, the target eNB sends downlink data to the UE according to the downlink data state report and the downlink data received from the source eNB.

Preferably, the UE uplink grant information is allocated by the target eNB to the UE and includes one of the following information:
a starting system frame number and subframe number, and an ending system frame number and subframe number;
the starting system frame number and subframe number, and a number of spaced cyclic subframes; and
the starting system frame number and subframe number, the number of spaced cyclic subframes and a maximum number of cycles.

### Embodiment 2

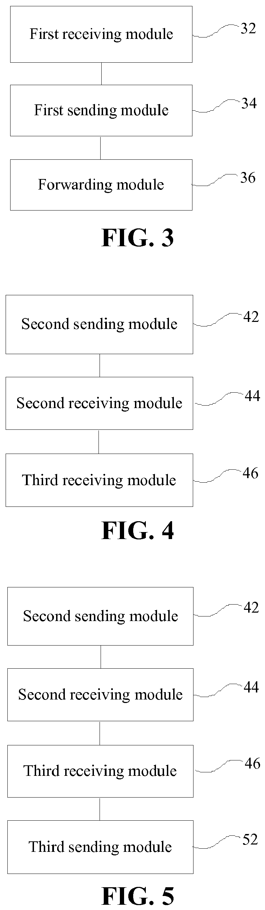

An embodiment of the present invention provides a handover processing device applied to a source eNB. FIG. 3 is a block diagram 1 of a handover processing device according to an embodiment of the present invention. As shown in FIG. 3, the device includes a first receiving module 32, a first sending module 34 and a forwarding module 36.

The first receiving module 32 is configured to receive, in a handover process of a UE from a source cell of the source eNB to a target cell of a target eNB, at least one of UE uplink grant information and UE access indication information of the target eNB, where the UE access indication information is indication information for the UE to access the target cell.

The first sending module 34 is configured to send a downlink data state report of the UE to the target eNB according to at least one of the UE uplink grant information and the UE access indication information.

The forwarding module 36 is configured to forward downlink data of the UE to the target eNB according to at least one of the UE uplink grant information and the UE access indication information.

Preferably, the UE access indication information includes at least one of an indication that the target cell has received random access preamble information of the UE, an indication that the target cell has received first piece of scheduled uplink transmission information of the UE, an indication that the target cell has received RRC connection reconfiguration complete information of the UE and an indication that the target cell has received first piece of uplink data of the UE.

Preferably, the first receiving module is further configured to perform at least one of the steps described below. The first receiving module sends a handover request message to the target eNB and receives a response message sent by the target eNB according to the handover request message, where the response message carries the UE uplink grant information.

The first receiving module receives the UE access indication information, where the UE access indication information is sent by the target eNB after the target cell has received the RRC connection reconfiguration complete information of the UE or the random access preamble information of the UE or the first piece of scheduled uplink transmission information of the UE or the first piece of uplink data of the UE.

Preferably, the first receiving module 34 includes at least one of the units described below.
A first sending unit is configured to send the downlink data state report of the UE to the target eNB at a first uplink grant subframe indicated by the UE uplink grant information.
A second sending unit is configured to send the downlink data state report of the UE to the target eNB i ms before the first uplink grant subframe indicated by the UE uplink grant information.
A third sending unit is configured to send the downlink data state report of the UE to the target eNB at each uplink grant subframe indicated by the UE uplink grant information.
A fourth sending unit is configured to send the downlink data state report of the UE to the target eNB i ms before the each uplink grant subframe indicated by the UE uplink grant information.
A fifth sending unit is configured to send the downlink data state report of the UE to the target eNB when the UE access indication information is the indication that the target cell has received the random access preamble information of the UE or the indication that the target cell has received the first piece of scheduled uplink transmission information of the UE.

Preferably, the forwarding module 36 includes at least one of the units described below.
A first forwarding unit is configured to forward the downlink data of the UE to the target eNB at the first uplink grant subframe indicated by the UE uplink grant information.
A second forwarding unit is configured to forward the downlink data of the UE to the target eNB i ms before the first uplink grant subframe indicated by the UE uplink grant information.
A third forwarding unit is configured to forward the downlink data of the UE to the target eNB when the UE access indication information is the indication that the target cell has received the random access preamble information of the UE or the indication that the target cell has received the first piece of scheduled uplink transmission information of the UE.

An embodiment of the present invention further provides a handover processing device applied to a target eNB. FIG. 4 is a block diagram 2 of a handover processing device according to an embodiment of the present invention. As shown in FIG. 4, the device includes a second sending module 42, a second receiving module 44 and a third receiving module 46.

The second sending module 42 is configured to send, in a handover process of a UE from a source cell of a source eNB to a target cell of the target eNB, at least one of UE uplink grant information and UE access indication information to the source eNB, where the UE access indication information is indication information for the UE to access the target cell.

The second receiving module 44 is configured to receive a downlink data state report of the UE sent by the source eNB according to at least one of the UE uplink grant information and the UE access indication information.

The third receiving module 46 is configured to receive downlink data of the UE forwarded by the source eNB according to at least one of the UE uplink grant information and the UE access indication information.

Preferably, the UE access indication information includes at least one of an indication that the target cell has received random access preamble information of the UE, an indication that the target cell has received first piece of scheduled uplink transmission information of the UE, an indication that the target cell has received RRC connection reconfiguration complete information of the UE and an indication that the target cell has received first piece of uplink data of the UE.

Preferably, the second sending module is further configured to perform at least one of the steps described below. The second sending module receives a handover request message sent by the source eNB and sends a response message of the handover request message to the source eNB, where the response message carries the UE uplink grant information.

The second sending module sends the UE access indication information to the source eNB after the target cell has received the RRC connection reconfiguration complete information of the UE or the random access preamble information of the UE or the first piece of scheduled uplink transmission information of the UE or the first piece of uplink data of the UE.

Preferably, the second receiving module 44 includes at least one of the units described below.
A first receiving unit is configured to receive the downlink data state report of the UE, where the downlink data state report of the UE is sent by the source eNB at a first uplink grant subframe indicated by the UE uplink grant information.
A second receiving unit is configured to receive the downlink data state report of the UE, where the downlink data state report of the UE is sent by the source eNB i ms before the first uplink grant subframe indicated by the UE uplink grant information.
A third receiving unit is configured to receive the downlink data state report of the UE, where the downlink data state report of the UE is sent by the source eNB at each uplink grant subframe indicated by the UE uplink grant information.
A fourth receiving unit is configured to receive the downlink data state report of the UE, where the downlink data state report of the UE is sent by the source eNB i ms before the each uplink grant subframe indicated by the UE uplink grant information.
A fifth receiving unit is configured to receive the downlink data state report of the UE, where the downlink data state report of the UE is sent by the source eNB when the UE access indication information is the indication that the target cell has received the random access preamble information of the UE or the indication that the target cell has received the first piece of scheduled uplink transmission information of the UE.

Preferably, the third receiving module 46 performs at least one of the steps described below. The third receiving module 46 receives the downlink data of the UE, where the downlink data of the UE is forwarded by the source eNB at the first uplink grant subframe indicated by the UE uplink grant information.

The third receiving module 46 receives the downlink data of the UE, where the downlink data of the UE is forwarded by the source eNB i ms before the first uplink grant subframe indicated by the UE uplink grant information.

The third receiving module 46 receives the downlink data of the UE, wherein the downlink data of the UE is forwarded by the source eNB when the UE access indication information is the indication that the target cell has received the random access preamble information of the UE or the indication that the target cell has received the first piece of scheduled uplink transmission information of the UE.

FIG. 5 is a block diagram of a handover processing device according to a preferred embodiment of the present invention. As shown in FIG. 5, the device further includes a third sending module 52.

The third sending module 52 is configured to send downlink data to the UE according to the downlink data state report and the downlink data received from the source eNB after it is determined that the target cell is capable of sending the downlink data to the UE.

All the functions of the modules and units described above may be executed by a processor of an eNB.

### Embodiment 3

An embodiment of the present invention further provides a storage medium. Optionally, in the embodiment, the storage medium may be configured to store program codes for executing the steps described below.

In step S1, in a handover process of a UE from a source cell of a source eNB to a target cell of a target eNB, the source eNB receives at least one of UE uplink grant information and UE access indication information of the target eNB, where the UE access indication information is indication information for the UE to access the target cell.

In step S2, the source eNB sends a downlink data state report of the UE to the target eNB according to at least one of the UE uplink grant information and the UE access indication information.

In step S3, the source eNB forwards downlink data of the UE to the target eNB according to at least one of the UE uplink grant information and the UE access indication information. Optionally, in the embodiment, the storage medium may include, but is not limited to, a USB flash disk, a read-only memory (ROM), a random access memory (RAM), a mobile hard disk, a magnetic disk, an optical disk or another medium capable of storing the program codes. Optionally, for specific examples in the embodiment, reference may be made to the examples described in the above-mentioned embodiments and optional implementation modes, and repetition will not be made herein.

### Embodiment 4

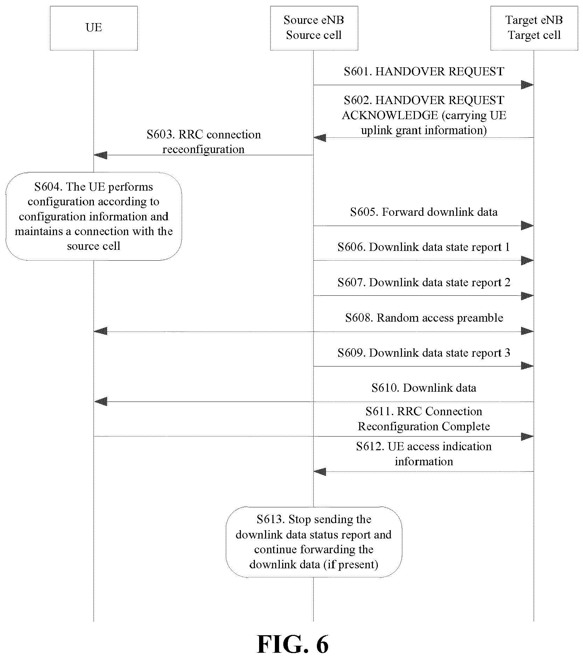

An embodiment of the present invention provides an enhanced handover method. The method includes the following steps: in a handover process of a UE from a source cell of a source eNB to a target cell of a target eNB, the source eNB receives at least one of UE uplink (UL) grant information and UE access indication information from the target eNB, sends a downlink data state report of the UE to the target eNB according to at least one of the UE uplink grant information and the UE access indication information, and forwards downlink (DL) data of the UE to the target eNB according to at least one of the UE uplink grant information and the UE access indication information. FIG. 6 is a schematic diagram 1 of an enhanced handover method according to a preferred embodiment of the present invention. As shown in FIG. 6, the method includes the steps described below.

In step S601, the source eNB determines to switch the UE from the source cell of the source eNB to the target cell of the target eNB and the UE maintains a connection with the source cell in the handover process. The source eNB sends a HANDOVER REQUEST message to the target eNB.

In step S602, the target eNB receives the HANDOVER REQUEST message, agrees to a handover request of the UE, and returns a HANDOVER REQUEST ACKNOWLEDGE message to the source eNB. The HANDOVER REQUEST ACKNOWLEDGE message carries the UE uplink grant information (a starting system frame number x, a starting subframe number y and a number n of spaced cyclic subframes (i.e., an uplink subframe is granted every n sub frames)).

In step S603, the source eNB receives the HANDOVER REQUEST ACKNOWLEDGE message, determines that the target eNB has agreed to the handover request of the UE, and sends an RRC Connection Reconfiguration message to the UE through the source cell.

In step S604, the UE receives the RRC Connection Reconfiguration message and configures radio resources according to configuration information carried in the message; the UE maintains the connection with the source cell as much as possible in the handover process.

In step S605, the source eNB forwards the downlink data of the UE to the target eNB at a subframe y of a system frame x according to the UE uplink grant information carried in the HANDOVER REQUEST ACKNOWLEDGE message.

In step S606, the source eNB sends a first downlink data state report of the UE to the target eNB at the subframe y of the system frame x according to the UE uplink grant information carried in the HANDOVER REQUEST ACKNOWLEDGE message.

In step S607, the source eNB sends a second downlink data state report of the UE to the target eNB at an (n+1)th subframe subsequent to the subframe y of the system frame x.

In step S608, the UE performs a random access to the target cell.

In step S609, the source eNB sends a third downlink data state report of the UE to the target eNB at a 2*(n+1)th subframe subsequent to the subframe y of the system frame x.

In step S610, after the target eNB determines that the target cell is capable of sending the downlink data to the UE, the target eNB sends downlink data to the UE according to a latest downlink data state report (the third downlink data state report) and the downlink data of the UE received from the source eNB.

In step S611, the UE sends an RRC Connection Reconfiguration Complete message to the target cell.

In step S612, according to the RRC Connection Reconfiguration Complete message of the UE received by the target cell, the target eNB sends the UE access indication information to the source eNB to indicate that the target cell has received the RRC Connection Reconfiguration Complete message of the UE.

In step S613, the source eNB stops sending the downlink data status report of the UE and continues forwarding the downlink data of the UE (if present) according to the received UE access indication information indicating that the target cell has received the RRC Connection Reconfiguration Complete message of the UE.

### Embodiment 5

Steps 1 to 4 are the same as steps S601 to S604 in the embodiment 4 and not repeated herein.

In step 5, a source eNB forwards downlink data of a UE to a target eNB i ms before a subframe y of a system frame x according to UE uplink grant information carried in a HANDOVER REQUEST ACKNOWLEDGE message, where i is a preset value (the downlink data is forwarded in advance under consideration of a delay of an X2 interface).

In step 6, the source eNB sends a first downlink data state report of the UE to the target eNB i ms before the subframe y of the system frame x according to the UE uplink grant information carried in the HANDOVER REQUEST ACKNOWLEDGE message.

In step 7, the source eNB sends a second downlink data state report of the UE to the target eNB i ms before an (n+1)th subframe subsequent to the subframe y of the system frame x.

In step 8, the UE performs a random access to a target cell.

In step 9, the source eNB sends a third downlink data state report of the UE to the target eNB i ms before a 2*(n+1)th subframe subsequent to the subframe y of the system frame x.

Steps 10 to 13 are the same as steps S610 to S613 in the embodiment 4 and not repeated herein.

### Embodiment 6

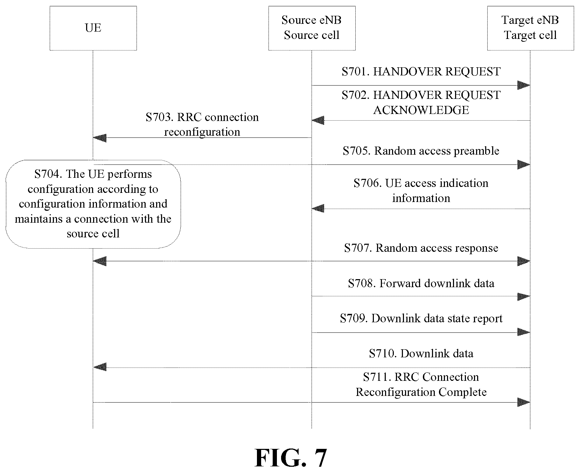

FIG. 7 is a schematic diagram 2 of an enhanced handover method according to a preferred embodiment of the present invention. As shown in FIG. 7, the method includes the steps described below.

In step S701, a source eNB determines to switch a UE from a source cell of the source eNB to a target cell of a target eNB and the UE maintains a connection with the source cell in the handover process. The source eNB sends a HANDOVER REQUEST message to the target eNB.

In step S702, the target eNB receives the HANDOVER REQUEST message, agrees to a handover request of the UE, and returns a HANDOVER REQUEST ACKNOWLEDGE message to the source eNB.

In step S703, the source eNB receives the HANDOVER REQUEST ACKNOWLEDGE message, determines that the target eNB has agreed to the handover request of the UE, and sends an RRC Connection Reconfiguration message to the UE through the source cell.

In step S704, the UE receives the RRC Connection Reconfiguration message and configures radio resources according to configuration information carried in the message; the UE maintains the connection with the source cell as much as possible in the handover process.

In step S705, the UE sends a Random Access Preamble to the target cell.

In step S706, according to the Random Access Preamble of the UE received by the target cell, the target eNB sends UE access indication information to the source eNB to indicate that the target cell has received the Random Access Preamble of the UE.

In step S707, the target cell returns a Random Access Response to the UE.

In step S708, the source eNB forwards downlink data of the UE to the target eNB according to the received UE access indication information indicating that the target cell has received the Random Access Preamble of the UE.

In step S709, the source eNB sends a downlink data state report of the UE to the target eNB according to the received UE access indication information indicating that the target cell has received the Random Access Preamble of the UE.

In step S710, after the target eNB determines that the target cell is capable of sending downlink data to the UE, the target eNB sends the downlink data to the UE according to a latest downlink data state report and the downlink data of the UE received from the source eNB.

In step S711, the UE sends an RRC Connection Reconfiguration Complete message to the target cell.

Apparently, it should be understood by those skilled in the art that each of the above-mentioned modules or steps of the present invention may be implemented by a general-purpose computing device, the modules or steps may be concentrated on a single computing device or distributed on a network composed of multiple computing devices, and alternatively, the modules or steps may be implemented by program codes executable by the computing devices, so that the modules or steps may be stored in a storage device and executed by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention. For those skilled in the art, the present invention may have various modifications and variations. Any modifications, equivalent substitutions, improvements and the like made within the spirit and principle of the present invention should fall within the scope of the present invention.

### INDUSTRIAL APPLICABILITY

The technical solutions provided by the embodiments of the present invention may be applied to the field of communications, solving the problem in the existing art that the downlink data cannot be sent to the UE in time due to the possible absence of related downlink data and downlink data state report in the target eNB, avoiding the temporary traffic interruption and improving the user experience.

## Claims

1. A handover processing method, comprising:
in a handover process of a user equipment (UE) from a source cell of a source evolved NodeB (eNB) to a target cell of a target eNB, receiving, by the source eNB, at least one of UE uplink grant information and UE access indication information of the target eNB, wherein the UE access indication information is indication information for the UE to access the target cell;
sending, by the source eNB, a downlink data state report of the UE to the target eNB according to at least one of the UE uplink grant information and the UE access indication information; and
forwarding, by the source eNB, downlink data of the UE to the target eNB according to at least one of the UE uplink grant information and the UE access indication information.

2. The method of claim 1, wherein the UE access indication information comprises at least one of:
an indication that the target cell has received random access preamble information of the UE, an indication that the target cell has received first piece of scheduled uplink transmission information of the UE, an indication that the target cell has received radio resource control (RRC) connection reconfiguration complete information of the UE and an indication that the target cell has received first piece of uplink data of the UE.

3. The method of claim 2, wherein the receiving, by the source eNB, at least one of UE uplink grant information and UE access indication information of the target eNB comprises at least one of:
sending, by the source eNB, a handover request message to the target eNB and receiving a response message sent by the target eNB according to the handover request message, wherein the response message carries the UE uplink grant information; and
receiving, by the source eNB, the UE access indication information, wherein the UE access indication information is sent by the target eNB after the target cell has received the RRC connection reconfiguration complete information of the UE or the random access preamble information of the UE or the first piece of scheduled uplink transmission information of the UE or the first piece of uplink data of the UE.

4. The method of claim 3, wherein the sending, by the source eNB, a downlink data state report of the UE to the target eNB according to at least one of the UE uplink grant information and the UE access indication information comprises at least one of:
sending, by the source eNB, the downlink data state report of the UE to the target eNB at a first uplink grant subframe indicated by the UE uplink grant information;
sending, by the source eNB, the downlink data state report of the UE to the target eNB i ms before the first uplink grant subframe indicated by the UE uplink grant information;
sending, by the source eNB, the downlink data state report of the UE to the target eNB at each uplink grant subframe indicated by the UE uplink grant information;
sending, by the source eNB, the downlink data state report of the UE to the target eNB i ms before the each uplink grant subframe indicated by the UE uplink grant information; and
sending, by the source eNB, the downlink data state report of the UE to the target eNB when the UE access indication information is the indication that the target cell has received the random access preamble information of the UE or the indication that the target cell has received the first piece of scheduled uplink transmission information of the UE.

5. The method of claim 3, wherein the forwarding, by the source eNB, downlink data of the UE to the target eNB according to at least one of the UE uplink grant information and the UE access indication information comprises at least one of:
forwarding, by the source eNB, the downlink data of the UE to the target eNB at a first uplink grant subframe indicated by the UE uplink grant information;
forwarding, by the source eNB, the downlink data of the UE to the target eNB i ms before the first uplink grant subframe indicated by the UE uplink grant information; and
forwarding, by the source eNB, the downlink data of the UE to the target eNB when the UE access indication information is the indication that the target cell has received the random access preamble information of the UE or the indication that the target cell has received the first piece of scheduled uplink transmission information of the UE.

6. The method of any one of claims 1 to 5, wherein
the UE uplink grant information is allocated by the target eNB to the UE and comprises one of:
a starting system frame number and subframe number, and an ending system frame number and subframe number;
the starting system frame number and subframe number, and a number of spaced cyclic subframes; and
the starting system frame number and subframe number, the number of spaced cyclic subframes and a maximum number of cycles.

7. A handover processing method, comprising:
in a handover process of a user equipment (UE) from a source cell of a source evolved NodeB (eNB) to a target cell of a target eNB, sending, by the target eNB, at least one of UE uplink grant information and UE access indication information to the source eNB, wherein the UE access indication information is indication information for the UE to access the target cell;
receiving, by the target eNB, a downlink data state report of the UE sent by the source eNB according to at least one of the UE uplink grant information and the UE access indication information; and
receiving, by the target eNB, downlink data of the UE forwarded by the source eNB according to at least one of the UE uplink grant information and the UE access indication information.

8. The method of claim 7, wherein the UE access indication information comprises at least one of:
an indication that the target cell has received random access preamble information of the UE, an indication that the target cell has received first piece of scheduled uplink transmission information of the UE, an indication that the target cell has received radio resource control (RRC) connection reconfiguration complete information of the UE and an indication that the target cell has received first piece of uplink data of the UE.

9. The method of claim 8, wherein the sending, by the target eNB, at least one of UE uplink grant information and UE access indication information to the source eNB comprises at least one of:
receiving, by the target eNB, a handover request message sent by the source eNB and sending a response message of the handover request message to the source eNB, wherein the response message carries the UE uplink grant information; and
sending, by the target eNB, the UE access indication information to the source eNB after the target cell has received the RRC connection reconfiguration complete information of the UE or the random access preamble information of the UE or the first piece of scheduled uplink transmission information of the UE or the first piece of uplink data of the UE.

10. The method of claim 9, wherein the receiving, by the target eNB, a downlink data state report of the UE sent by the source eNB according to at least one of the UE uplink grant information and the UE access indication information comprises at least one of:
receiving, by the target eNB, the downlink data state report of the UE, wherein the downlink data state report of the UE is sent by the source eNB at a first uplink grant subframe indicated by the UE uplink grant information;
receiving, by the target eNB, the downlink data state report of the UE, wherein the downlink data state report of the UE is sent by the source eNB i ms before the first uplink grant subframe indicated by the UE uplink grant information;
receiving, by the target eNB, the downlink data state report of the UE, wherein the downlink data state report of the UE is sent by the source eNB at each uplink grant subframe indicated by the UE uplink grant information;
receiving, by the target eNB, the downlink data state report of the UE, wherein the downlink data state report of the UE is sent by the source eNB i ms before the each uplink grant subframe indicated by the UE uplink grant information; and
receiving, by the target eNB, the downlink data state report of the UE, wherein the downlink data state report of the UE is sent by the source eNB when the UE access indication information is the indication that the target cell has received the random access preamble information of the UE or the indication that the target cell has received the first piece of scheduled uplink transmission information of the UE.

11. The method of claim 9, wherein the receiving, by the target eNB, downlink data of the UE forwarded by the source eNB according to at least one of the UE uplink grant information and the UE access indication information comprises at least one of:
receiving, by the target eNB, the downlink data of the UE, wherein the downlink data of the UE is forwarded by the source eNB at a first uplink grant subframe indicated by the UE uplink grant information;
receiving, by the target eNB, the downlink data of the UE, wherein the downlink data of the UE is forwarded by the source eNB i ms before the first uplink grant subframe indicated by the UE uplink grant information; and
receiving, by the target eNB, the downlink data of the UE, wherein the downlink data of the UE is forwarded by the source eNB when the UE access indication information is the indication that the target cell has received the random access preamble information of the UE or the indication that the target cell has received the first piece of scheduled uplink transmission information of the UE.

12. The method of any one of claims 7 to 11, further comprising:
after the target eNB determines that the target cell is capable of sending the downlink data to the UE, sending, by the target eNB, downlink data to the UE according to the downlink data state report and the downlink data received from the source eNB.

13. The method of claim 12, wherein
the UE uplink grant information is allocated by the target eNB to the UE and comprises one of:
a starting system frame number and subframe number, and an ending system frame number and subframe number;
the starting system frame number and subframe number, and a number of spaced cyclic subframes; and
the starting system frame number and subframe number, the number of spaced cyclic subframes and a maximum number of cycles.

14. A handover processing device, applied to a source evolved NodeB (eNB), and comprising:
a first receiving module, which is configured to receive, in a handover process of a user equipment (UE) from a source cell of the source eNB to a target cell of a target eNB, at least one of UE uplink grant information and UE access indication information of the target eNB, wherein the UE access indication information is indication information for the UE to access the target cell;
a first sending module, which is configured to send a downlink data state report of the UE to the target eNB according to at least one of the UE uplink grant information and the UE access indication information; and
a forwarding module, which is configured to forward downlink data of the UE to the target eNB according to at least one of the UE uplink grant information and the UE access indication information.

15. The device of claim 14, wherein the UE access indication information comprises at least one of:
an indication that the target cell has received random access preamble information of the UE, an indication that the target cell has received first piece of scheduled uplink transmission information of the UE, an indication that the target cell has received radio resource control (RRC) connection reconfiguration complete information of the UE and an indication that the target cell has received first piece of uplink data of the UE.

16. The device of claim 15, wherein the first receiving module is further configured to perform at least one of:
sending a handover request message to the target eNB and receiving a response message sent by the target eNB according to the handover request message, wherein the response message carries the UE uplink grant information; and
receiving the UE access indication information, wherein the UE access indication information is sent by the target eNB after the target cell has received the RRC connection reconfiguration complete information of the UE or the random access preamble information of the UE or the first piece of scheduled uplink transmission information of the UE or the first piece of uplink data of the UE.

17. A handover processing device, applied to a target evolved NodeB (eNB), and comprising:
a second sending module, which is configured to send, in a handover process of a user equipment (UE) from a source cell of a source eNB to a target cell of the target eNB, at least one of UE uplink grant information and UE access indication information to the source eNB, wherein the UE access indication information is indication information for the UE to access the target cell;
a second receiving module, which is configured to receive a downlink data state report of the UE sent by the source eNB according to at least one of the UE uplink grant information and the UE access indication information; and
a third receiving module, which is configured to receive downlink data of the UE forwarded by the source eNB according to at least one of the UE uplink grant information and the UE access indication information.

18. The device of claim 17, wherein the UE access indication information comprises at least one of:
an indication that the target cell has received random access preamble information of the UE, an indication that the target cell has received first piece of scheduled uplink transmission information of the UE, an indication that the target cell has received radio resource control (RRC) connection reconfiguration complete information of the UE and an indication that the target cell has received first piece of uplink data of the UE.

19. The device of claim 18, wherein the second receiving module is further configured to perform at least one of:
receiving a handover request message sent by the source eNB and sending a response message of the handover request message to the source eNB, wherein the response message carries the UE uplink grant information; and
sending the UE access indication information to the source eNB after the target cell has received the RRC connection reconfiguration complete information of the UE or the random access preamble information of the UE or the first piece of scheduled uplink transmission information of the UE or the first piece of uplink data of the UE.

20. A computer storage medium storing executable indications, wherein the executable indications are used for executing the handover processing method of any one of claims 1 to 6 or the handover processing method of any one of claims 7 to 13.
